# EUROPEAN PATENT APPLICATION

(11) **EP 4 600 886 A1**
(43) Date of publication of application: **13.08.2025**
(21) Application number: 24218301.0
(22) Date of filing: 09.12.2024
(51) Int. Cl.: G06Q 20/18, G06Q 20/20, G07G 1/01, G07G 1/12

(54) **PAYMENT DEVICE, METHOD, AND STORAGE MEDIUM**

(30) Priority: 07.02.2024 JP 2024016894
(71) Applicant: Toshiba TEC Kabushiki Kaisha, Tokyo 141-8562 (JP)
(72) Inventor: TANIIKE, Yuki, 141-8562 Tokyo (JP)
(74) Representative: Hoffmann Eitle

(57) **Abstract**

A payment device connectable to a point-of-sale (POS) terminal installed in a store includes a slot through which bills or coins can be inserted, a plurality of storage units in which the bills or coins can be stored for each denomination, a display device, and a controller configured to, in response to a command received from the POS terminal, perform a payment process to receive and dispense bills and coins. The controller is further configured to: switch between first and second modes, and between payment processes, control the display device to display: in the first mode, first information for a store clerk of the store, the first information indicating a detail of a status of the payment device, and in the second mode, second information for a customer of the store without the detail of the status of the payment device.

## Description

### CROSS-REFERENCE TO RELATED APPLICATION(S)

This application is based upon and claims the benefit of priority from Japanese Patent Application No. 2024-016894, filed February 7, 2024, the entire contents of which are incorporated herein by reference.

### FIELD

Embodiments described herein relate generally to a payment device, a method, and a storage medium.

### BACKGROUND

Conventionally, in a store such as a convenience store or a grocery store, a payment device has been used for receiving and storing bills and coins paid by a customer and dispensing the right change in conjunction with a sales data processing device such as a POS (Point of Sale) terminal.

In addition, there is a self-service POS system for a customer to register and/or check out items. For example, there are two types of system called "semi-self-service" in which a store clerk performs registration of items using a registration terminal and a customer performs payment for the registered items using a payment terminal, and "full-self-service" in which a customer performs registration and checkout using a registration/payment terminal by themselves. The payment device communicates with such terminals and manages bills and coins paid by the customer and to be dispensed as change.

Typically, the payment device has a display for displaying a state of the payment device itself. For example, the payment device displays a message indicating that replenishment of cash is necessary when the number of particular bills or coins stored in the payment device falls below a lower limit threshold value, or displays a message indicating that removal of cash is necessary when the number of particular bills or coins exceeds an upper limit threshold value.

Further, the payment device displays the current total amount of bills and coins stored in the payment device for each denomination, or displays an error and guidance message when an error such as a jam occurs. An operator of the payment device such as a store clerk can efficiently manage the payment device by replenishing and removing cash, fixing errors, and the like according to the displayed messages.

The messages displayed on the display of the payment device are mainly for a store clerk or the like who manages the payment device, and are not for a customer or an end user. However, when the payment device is used in the above-described semi-self-service and full-self-service systems, it is possible for the customer to see the display of the payment device, which may confuse the customer.

### SUMMARY OF THE INVENTION

Embodiments of the present disclosure provide a payment device, a method, and a storage medium capable of switching information displayed on a display unit according to a usage environment.

A payment device connectable to a POS terminal installed in a store, comprises: a slot through which bills or coins can be inserted; a plurality of storage units in which the bills or coins can be stored for each denomination; a display device; an input device; and a controller configured to, in response to a command received from the POS terminal, perform a payment process to receive and dispense bills and coins. The controller is further configured to: switch a display mode of the display device to one of a plurality of modes, including first and second modes, in accordance with an input made through the input device, and in a time period between performing of payment processes, control the display device to display: in the first mode, first information for a store clerk of the store, the first information indicating a detail of a status of the payment device, and in the second mode, second information for a customer of the store without the detail of the status of the payment device.

One of the objects of the present invention is to improve prior art techniques and overcome at least some of the prior art problems as for instance above illustrated.

According to a first aspect of the present invention, it is provided a payment device connectable to a point-of-sale (POS) terminal installed in a store, comprising a slot through which bills or coins can be inserted; a plurality of storage units in which the bills or coins can be stored for each denomination; a display device; an input device; a controller configured to, in response to a command received from the POS terminal, perform a payment process to receive and dispense bills and coins, wherein the controller is further configured to switch a display mode of the display device to one of a plurality of modes, including first and second modes, in accordance with an input made through the input device, and in a time period between performing of payment processes, control the display device to display in the first mode, first information for a store clerk of the store, the first information indicating a detail of a status of the payment device, and in the second mode, second information for a customer of the store without the detail of the status of the payment device.

Optionally, in the payment device according to the first aspect of the invention, the first information indicates a total number of each of the bills or the coins stored in the storage units, and the second information indicates that the payment device is in a standby state.

Optionally, in the payment device according to the fist aspect of the invention, the total number of each of the bills or the coins is displayed by a chart.

Optionally, in the payment device according to the fist aspect of the invention, the controller is configured to determine a total number of each of the bills or the coins stored in the storage units, determine whether each of the bills or the coins is to be replenished or collected, and upon determining that one of the bills or the coins is to be replenished or collected, control the display device to display in the first mode, a message indicating that said one of the bills or the coins is to be replenished or collected, and in the second mode, a message indicating that the payment device is in a standby state.

Optionally, in the payment device according to the fist aspect of the invention, the controller determines that one of the bills or the coins is to be replenished when the total number thereof is less than a first threshold value.

Optionally, in the payment device according to the fist aspect of the invention, the controller determines that one of the bills or the coins is to be collected when the total number thereof is greater than a second threshold value that is greater than the first threshold value.

Optionally, in the payment device according to the fist aspect of the invention, in the first mode the message further indicates a number of said one of the bills or the coins to be replenished or collected.

Optionally, in the payment device according to the fist aspect of the invention, the first information indicates a type of an error occurring in the payment device, and the second information includes a message to call a store clerk.

Optionally, in the payment device according to the fist aspect of the invention, the input device is locked and needs to be unlocked for the input to be made.

Optionally, in the payment device according to the fist aspect of the invention, the input device includes a keyhole and is unlocked by inserting a matching key into the keyhole and rotating the key.

According to a second aspect of the invention, it is provided a method performed by a payment device connectable to a point-of-sale (POS) terminal installed in a store, the payment device including a slot through which bills or coins can be inserted, a plurality of storage units in which the bills or coins can be stored for each denomination, a display device, and an input device, the method comprising receiving a command from the POS terminal, and performing a payment process to receive and dispense bills and coins; switching a display mode of the display device to one of a plurality of modes, including first and second modes, in accordance with an input made through the input device; and in a time period between performing of payment processes, displaying in the first mode, first information for a store clerk of the store, the first information indicating a detail of a status of the payment device, and in the second mode, second information for a customer of the store without the detail of the status of the payment device.

Optionally, in the method according to the second aspect of the invention, the first information indicates a total number of each of the bills or the coins stored in the storage units, and the second information indicates that the payment device is in a standby state.

Optionally, in the method according to the second aspect of the invention, the total number of each of the bills or the coins is displayed by a chart.

Optionally, the method according to the second aspect of the invention further comprises determining a total number of each of the bills or the coins stored in the storage units; determining whether each of the bills or the coins is to be replenished or collected; and upon determining that one of the bills or the coins is to be replenished or collected, displaying in the first mode, a message indicating that said one of the bills or the coins is to be replenished or collected, and in the second mode, a message indicating that the payment device is in a standby state.

Optionally, in the method according to the second aspect of the invention, one of the bills or the coins is to be replenished when the total number thereof is less than a first threshold value.

Optionally, in the method according to the second aspect of the invention, one of the bills or the coins is to be collected when the total number thereof is greater than a second threshold value that is greater than the first threshold value.

Optionally, in the method according to the second aspect of the invention, in the first mode the message further indicates a number of said one of the bills or the coins to be replenished or collected.

Optionally, in the method according to the second aspect of the invention, the first information indicates a type of an error occurring in the payment device, and the second information includes a message to call a store clerk.

Optionally, in the method according to the second aspect of the invention, the input device is locked and needs to be unlocked for the input to be made.

According to a third aspect of the invention, it is provided a non-transitory computer readable storage medium that stores a program causing a computer with a bill or coin slot, a plurality of bill or coin storage units, a display device, and an input device, to perform a method comprising receiving a command from a POS terminal installed in a store and connected to the computer, and performing a payment process to receive and dispense bills and coins; switching a display mode of the display device to one of a plurality of modes, including first and second modes, in accordance with an input made through the input device; and in a time period between performing of payment processes, displaying in the first mode, first information for a store clerk of the store, the first information indicating a detail of a status of the computer, and spiritin the second mode, second information for a customer of the store without the detail of the status of the computer.

### BRIEF DESCRIPTION OF THE DRAWINGS

FIG. 1 is a diagram illustrating a sales data processing system including a payment device according to an embodiment.
FIG. 2 is a perspective view of an external appearance of the payment device.
FIG. 3 is a plan view of an internal configuration of the payment device.
FIG. 4 is an external view of an operation unit and a display unit of the payment device.
FIG. 5 is a diagram of a key operation unit of the payment device.
FIG. 6 is a hardware block diagram of the payment device.
FIG. 7 is a functional block diagram of a controller of the payment device.
FIG. 8 is a diagram of a screen displayed by the payment device.
FIG. 9 is a diagram of a screen displayed by the payment device.
FIG. 10 is a diagram of a screen displayed by the payment device.
FIG. 11 is a diagram of a screen displayed by the payment device.
FIG. 12 is a flowchart of a process performed by the payment device.

### DETAILED DESCRIPTION

Hereinafter, embodiments of this disclosure will be described in detail with reference to the accompanying drawings. The embodiments described below include a payment device connected to a sales data processing device such as a POS terminal, but embodiments of this disclosure are not limited thereto.

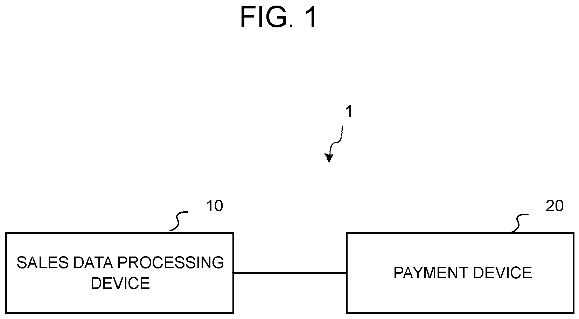

FIG. 1 is a diagram illustrating a sales data processing system 1 including a sales data processing device 10 and a payment device 20 according to an embodiment. The sales data processing device 10 is, for example, a POS terminal. The sales data processing device 10 may be, for example, a sales data processing device installed in a store or a portable sales data processing device such as a smartphone or a tablet terminal.

The sales data processing device 10 is provided in a store and executes a sales data process related to a commercial transaction of an item (or service) purchased by a customer. The sales data process includes, for example, a registration process for registering an item to be purchased by a customer, and a payment process for the registered item.

The sales data processing device 10 executes a registration process of storing or registering information of items purchased by a customer in a storage medium. Further, the sales data processing device 10 calculates the total amount of the registered items in response to a predetermined operation (hereinafter, also referred to as an ending operation) for instructing the end of the registration process or the start of the payment, and then executes a payment process for the registered items based on the calculated total amount.

The sales data processing device 10 is connected to the payment device 20 by wire or wirelessly. Note that the sales data processing device 10 and the payment device 20 may be connected via a device such as an I/O box or a communication device.

The payment device 20 cooperates with the sales data processing device 10 to receive and dispense cash, i.e., bills and coins. Specifically, the payment device 20 performs a process of sorting and storing bills and coins paid by a customer for each denomination, and receiving and discharging bills and coins to be returned as the change.

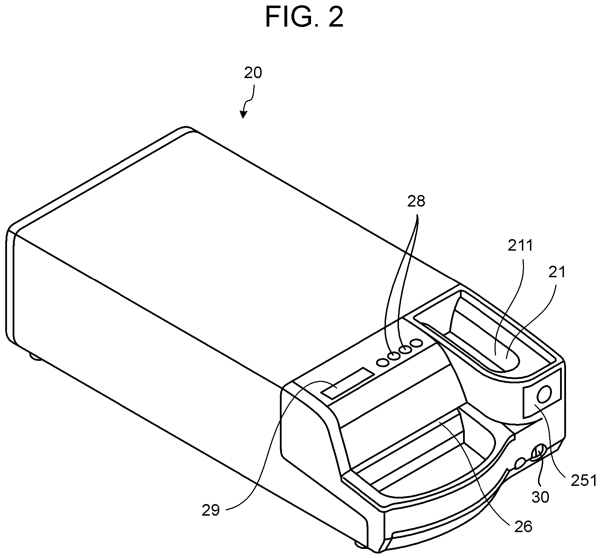

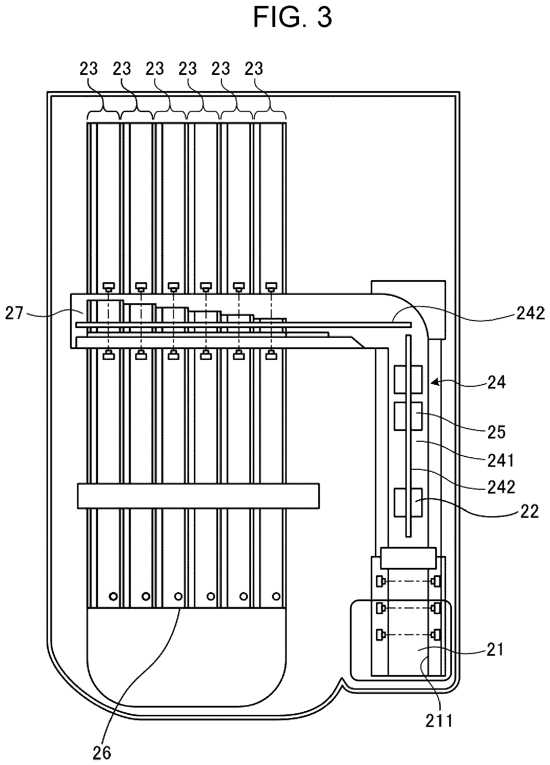

FIG. 2 is a perspective view of the payment device 20 according to an embodiment. FIG. 3 is a plan view of an internal configuration of the payment device 20. The payment device 20 includes a receiving unit 21, an authentication unit 22, a plurality of storage units 23, a conveyance unit 24, a reject unit 25, a dispenser unit 26, an operation panel 28, a display unit 29, and a key operation unit 30. The payment device 20 shown in FIG. 2 accepts coins only, but the embodiments thereof are not limited thereto and may also accept bills.

The receiving unit 21 has a coin slot 211 for receiving a coin. The authentication unit 22 checks and determines the genuineness of the coin received by the receiving unit 21. The storage units 23 store coins of the corresponding denominations, which have been determined to be genuine by the authentication unit 22. The conveyance unit 24 conveys coins from the receiving unit 21 to the corresponding storage units 23 via the authentication unit 22. The reject unit 25 removes the coin determined not to be genuine by the authentication unit 22 from the conveyance unit 24. The removed coins fall into a drawer 251 (see FIG. 2) which can be pulled out from the front of the payment device 20. The dispenser unit 26 dispenses coins as change from the storage unit 23.

As shown in FIG. 3, the conveyance unit 24 includes a conveyance surface 241 and conveyance belts 242. The conveyance surface 241 is a flat surface of a metal plate and holds the back surface of the coins being conveyed. Each of the conveyance belts 242 is an endless belt, and is arranged along the conveyance surface 241 under tension by a pair of pulleys (not shown), and is rotated by driving one of the pulleys. The conveyance belt 242 rotates in contact with the upper surface of the coins on the conveyance surface 241 to slide the coins along the conveyance surface 241 and convey the coins to the storage unit 23.

The payment device 20 includes a coin sorting unit 27. For example, the coin sorting unit 27 has six denomination sorting holes having different sizes of holes for 1 yen coin to 500 yen coins, and the sorting hole for 1 yen coin can only drop 1 yen coins, and the other coins pass through the upper portion thereof. Similarly, the coin sorting unit 27 has been formed, for example, from the right side to the left, a hole in which 1 yen coins fall, a hole in which 50 yen coins fall, a hole in which 5 yen coins fall, a hole in which 100 yen coins fall, a hole in which 10 yen coins fall, and a hole in which 500 yen coins fall. The coins conveyed by the conveyance belt 242 are stored in the storage unit 23 for each denomination by the coin sorting unit 27.

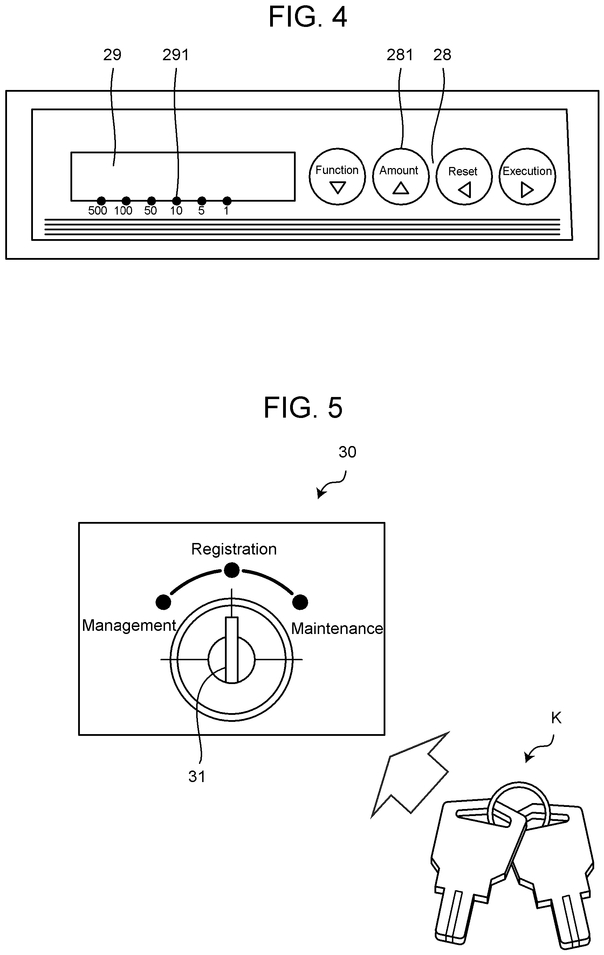

FIG. 4 is a diagram illustrating the operation panel 28 and the display unit 29. The operation panel 28 includes one or more buttons 281, and accepts input operations by a user. The operation panel 28 includes, for example, a button for selecting a function, a button for displaying the amount of coins stored in the storage units 23, a button for resetting the payment device 20, and a button for executing the selected function.

The display unit 29 is a display device such as an LCD (liquid crystal display). The display unit 29 displays various types of information under the control of the controller 40 described later. The key operation unit 30 receives input operations using a key. The lower part of the periphery of the display unit 29 shows a display position guide 291 of the indicator of the current inventory of each denomination.

FIG. 5 is a diagram illustrating an example of the key operation unit 30. As illustrated in FIG. 5, the key operation unit 30 has a keyhole 31 for inserting a key K. Further, the key operation unit 30 can switch to any one of the operation modes of "registration", "management", and "maintenance" by inserting the key K into the keyhole 31 and rotating the key K. Note that the key K can be inserted into and removed from the keyhole 31 at the "registration" position.

The "registration" is an operation mode for performing processing related to a commercial transaction in cooperation with a sales data processing device such as a

POS terminal. In a state in which the operation mode "registration" is set, the payment device 20 operates in either one of a store clerk operation mode in which a store clerk operates the payment device 20 and a customer operation mode in which a customer operates the payment device 20.

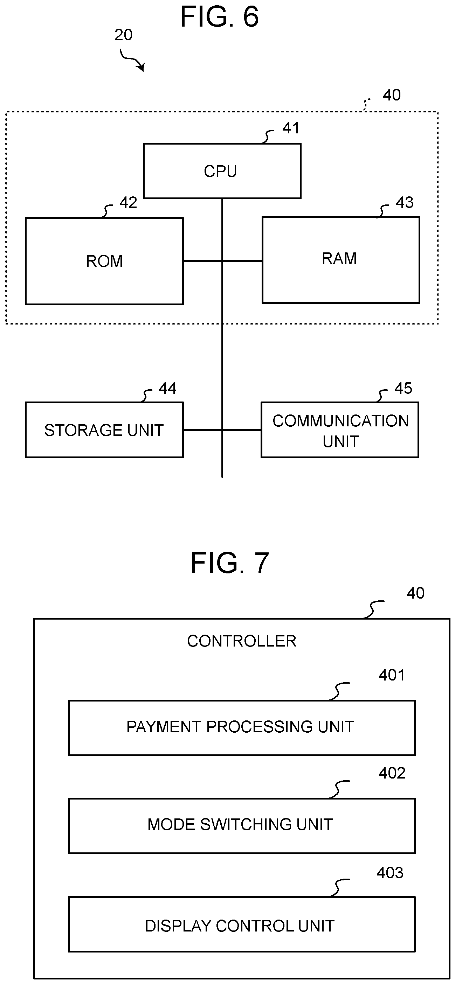

Incidentally, in a state in which the key K is set to "registration" (hereinafter, also referred to as during normal operation), whether to operate the payment device 20 in which operation mode of the store clerk operation mode and the customer operation mode is determined based on how the payment device 20 is used in the store. It is preferable to set according to the system configuration and operating environment (hereinafter, to be usage environment) to. For example, in an environment in which a store clerk mainly performs the operation of the payment device 20, it is preferable that the operation mode at the time of the normal operation be the store clerk operation mode. Further, for example, in an environment in which a customer mainly performs the operation of the payment device 20, it is preferable that the operation mode at the time of the normal operation is the customer operation mode. It is assumed that the operation mode during the normal operation can be freely set. Further, it is assumed that the operation mode during the normal operation is stored as setting information in a storage device 44 (see FIG. 6) or the like which will be described later.

The "management" is an operation mode (hereinafter, also referred to as a management mode) for collecting coins stored in the payment device 20. "Maintenance" is an operation mode (hereinafter also referred to as a maintenance mode) for performing maintenance work of the payment device 20. The management mode and the maintenance mode are switched by a clerk or the like carrying the key K. In other words, in the management mode and the maintenance mode, the payment device 20 is operated by a store clerk.

FIG. 6 is a hardware block diagram of the payment device 20. As illustrated in FIG. 6, the payment device 20 includes the above-described operation panel 28, the display unit 29, the key operation unit 30, and the like, as well as a CPU (central processing unit) 41, a ROM (read only memory) 42, a RAM (random access memory) 43, the storage device 44, a communication unit 45, and the like.

The CPU 41 is a processor and comprehensively controls the operation of the payment device 20. The ROM 42 stores various programs. The RAM 43 is a workspace for loading programs and various types of data.

The CPU 41, the ROM 42 and the RAM 43 are connected to each other via a bus or the like, and constitute a controller 40. The controller 40 executes various processes in accordance with one or more programs stored in the ROM 42 or the storage device 44 and loaded onto the RAM 43.

The storage device 44 includes a storage medium such as a flash memory, and maintains the stored programs and data even if the power supply is cut off. The storage device 44 stores programs that can be executed by the CPU 41 and various types of setting information. For example, the programs are for performing the functions described later. For example, the setting information holds the above-described setting related to the operation mode during the normal operation. Further, for example, the setting information holds a lower limit threshold value, an upper limit threshold value, a reference number of stored bills/coins, and the like relating to the number of stored bills/coins of each denomination stored in the storage unit 23. Here, the lower limit threshold value is the number of stored bills/coins for notifying the shortage of the current inventory, and the upper limit threshold value is the number of stored bills/coins for notifying the excess of current inventory. The reference number of stored bills/coins is, for example, the number of bills/coins set within the range of the lower limit threshold value and the upper limit threshold value.

Further, the storage device 44 stores display information holding information such as a message to be displayed on the display unit 29. The display information holds, for example, information for display corresponding to various states of the payment device 20 for each operation mode of the store clerk operation mode and the customer operation mode.

The communication unit 45 is a wired or wireless network interface circuit. The communication unit 45 communicates with the sales data processing device 10.

FIG. 7 is a functional block diagram of a functional configuration of the controller 40 of the payment device 20. As illustrated in FIG. 7, the controller 40 of the payment device 20 performs the functions of a payment processing unit 401, a mode switching unit 402, and a display control unit 403.

Those functions are implemented as software programs executed by the controller 40 or the CPU 41 of the payment device 20, but is not limited thereto. For example, some or all of the functions may be implemented by hardware such as dedicated circuitry.

The payment processing unit 401 performs various processes related to payment. For example, the payment processing unit 401 cooperates with the sales data processing device 10 to perform a receiving process for receiving the payment amount paid by the customer, and a change process for dispensing the change. Further, the payment processing unit 401 performs a replenishment process of replenishing bills and coins in the storage unit 23, a collection process of dispensing cash for collecting money from the storage unit 23, and the like.

It is assumed that the payment processing unit 401 switches the process to be executed in accordance with the operation mode of the payment device 20. For example, when the payment device 20 operates in the store clerk operation mode or the customer operation mode, the payment processing unit 401 executes the receiving process and the change process. Further, for example, when the payment device 20 operates in the management mode, the payment processing unit 401 executes the replenishment process and the collection process.

The mode switching unit 402 performs a process of switching the operation modes of the payment device 20. Specifically, the mode switching unit 402 switches the operation mode of the payment device 20 in accordance with the key operation on the key operation unit 30.

For example, when the key operation unit 30 is in the normal operation of "registration", the mode switching unit 402 operates the payment device 20 in the preset store clerk operation mode or customer operation mode. For example, when the key operation unit 30 is switched to "management" by the key K, the mode switching unit 402 causes the payment device 20 to operate in the management mode. For example, when the key operation unit 30 is switched to "maintenance" by the key K, the mode switching unit 402 causes the payment device 20 to operate in the maintenance mode.

Further, the switching of the operation mode is not limited to the operation on the key operation unit 30. For example, the mode switching unit 402 may switch the operation mode of the payment device 20 in response to an instruction from the sales data processing device 10. Further, for example, the mode switching unit 402 may switch the operation mode of the payment device 20 in response to an operation via the operation panel 28. However, while the payment device 20 is operating in the customer operation mode, in order to prevent the payment device 20 is inadvertently operated, the mode switching unit 402 does not accept any operations via the operation panel 28, or it is preferable not to accept any operation related to the mode switching via the operation panel 28.

The display control unit 403 controls the display unit 29 to display various kinds of information on the display unit 29. The display control unit 403 causes the display unit 29 to display information corresponding to the operation mode of the payment device 20 in cooperation with the mode switching unit 402. Hereinafter, an example of a screen displayed on the display unit 29 by the display control unit 403 will be described. In the present embodiment, the display control unit 403 performs the process related to the display of the display unit 29, but the process related to the display of the display unit 29 may be performed mainly by another processing unit such as the mode switching unit 402.

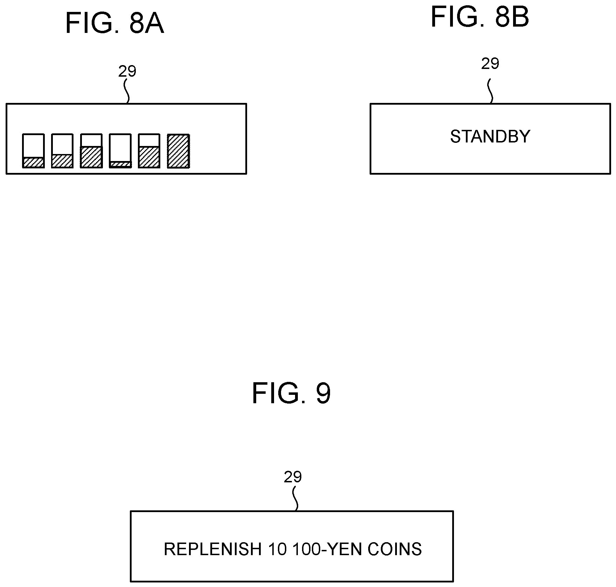

FIG. 8 to FIG. 11 are diagrams illustrating screens displayed on the display unit 29 by the display control unit 403.

### (Standby display)

FIGS. 8A and 8B illustrate screens displayed while the payment device 20 is on standby. Specifically, FIG. 8A shows a screen for the store clerk operation mode, and FIG. 8B shows a screen for the customer operation mode. Here, the standby of the payment device 20 means a state in which the payment device 20 is waiting for an instruction from the sales data processing device 10.

When operating in the store clerk operation mode, the display control unit 403, in the standby state, controls the display unit 29 to display a screen indicating the current stock of each type of coins stored in the storage unit 23 as shown in FIG. 8A. In the illustrated example, the current stock is shown graphically using a bar or a gauge.

That is, the display control unit 403 causes the display unit 29 to display the internal state of the payment device 20 related to the maintenance and management of the payment device 20. In this case, the store clerk who operates the payment device 20 can easily confirm the state of each coin stored in the payment device 20 by viewing the screen displayed on the display unit 29.

On the other hand, when operating in the customer operation mode, the display control unit 403 controls, in the standby state, the display unit 29 to display a screen indicating that it is in the standby state as shown in FIG. 8B.

For example, in the customer operation mode, when the screen of FIG. 8A is displayed on the display unit 29, since the information is unnecessary for the customer who operates the payment device 20, there is a possibility that the customer is confused about what to do, or the like, which hinders the operation. Therefore, the display control unit 403, when the payment device 20 is operating in the customer operation mode, rather than displaying the information related to maintenance and management of the payment device 20, useful when the customer operates the payment device 20, to display information indicating the state of the payment device 20 on the display unit 29.

### (Display during replenishment request or recall request)

In addition, in a case where the current stock of a specific denomination is less than the lower limit threshold value during standby of the payment device 20, the display control unit 403 may cause the display unit 29 to display the screen illustrated in FIG. 9 instead of the screen illustrated in FIG. 8A.

FIG. 9 is an example of a screen displayed when the current inventory of a particular denomination is less than the lower limit threshold value. As illustrated in FIG. 9, a denomination (for example, 100-yen coin) that is less than the lower limit threshold value and a replenishment number (for example, 10) of the denomination to be replenished are displayed. That is, the display control unit 403 causes the display unit 29 to display information related to maintenance and management of the payment device 20. In this case, the store clerk operating the payment device 20 can easily confirm the denomination below the lower limit threshold value and the number of sheets to be replenished by looking at the screen displayed on the display unit 29.

During the standby state of the payment device 20, even if the current stock of a particular denomination falls below the lower limit threshold value, if the payment device 20 is operating in the customer operation mode, the display control unit 403 displays the screen of FIG. 8B on the display unit 29 instead of the screen of FIG. 9.

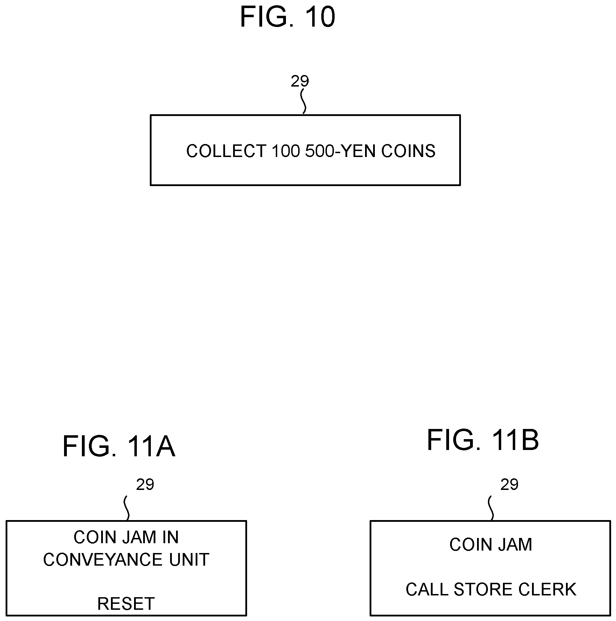

Further, when the payment device 20 is in a state in which the current stock of a specific denomination exceeds the upper limit threshold value during standby, the display control unit 403 may cause the display unit 29 to display the screen shown in FIG. 10 instead of the screen shown in FIG. 8A.

FIG. 10 is an example of a screen displayed when the current stock of a particular denomination exceeds the upper limit threshold value. As shown in FIG. 10, an example is shown in which the denomination (for example, 500 yen coin) exceeding the upper limit threshold value and the number thereof to be collected (for example, 100 coins) are displayed. That is, the display control unit 403 causes the display unit 29 to display information related to maintenance and management of the payment device 20. In this case, the store clerk operating the payment device 20 can easily confirm the denomination exceeding the upper limit threshold value and the number of sheets to be collected by looking at the screen displayed on the display unit 29.

In the standby of the payment device 20, even in a state where the current inventory of a particular denomination exceeds the upper limit threshold value, if the payment device 20 is operating in the customer operation mode, the display control unit 403 displays the screen of FIG. 8B on the display unit 29 instead of the screen of FIG. 10.

Here, it is preferable that the controller 40 of the payment device 20 notifies the sales data processing device 10 of the excess or deficiency of the current stock. Specifically, for example, when the current inventory of a particular denomination is less than the lower limit threshold value, the controller 40 functions as a notification unit for notifying the sales data processing device 10 of the insufficient denomination and the replenishment number. Further, when the current stock of a particular denomination exceeds the upper limit threshold value, the controller 40 (i.e., the notification unit) notifies the sales data processing device 10 of the exceeded denomination and its number to be collected.

### (Display during error)

When an error such as a coin jam occurs in the payment device 20 during the operation of the payment device 20, the display control unit 403 causes the display unit 29 to display a screen indicating the error and the countermeasure method. Also in this case, the display control unit 403 switches the information to be displayed on the display unit 29 between the store clerk operation mode and the customer operation mode.

For example, when an error such as a coin jam occurs in the payment device 20 operating in the store clerk operation mode, the display control unit 403 causes the display unit 29 to display the screen shown in FIG. 11A. That is, the display control unit 403 causes the display unit 29 to display information about the error generated in the payment device 20 and the countermeasure method related to the maintenance and management of the payment device 20 (for example, reset). In this case, the store clerk who operates the payment device 20 can easily confirm the contents of the error generated in the payment device 20 and the countermeasure method by viewing the screen displayed on the display unit 29.

On the other hand, when an error such as a coin jam occurs in the payment device 20 operating in the customer operation mode, the display control unit 403 causes the display unit 29 to display a screen shown in FIG. 11B. That is, the display control unit 403 causes the display unit 29 to display information about the error that has occurred in the payment device 20 and the countermeasure method.

Here, the countermeasure indicated in the customer operation mode is to contact a store clerk for him or her to deal with the situation, for example, to call the store clerk, and is not to request the customer to perform any operation. Thus, the customer who operates the payment device 20, by looking at the screen displayed on the display unit 29, it is possible to easily grasp the situation and that should be communicated to the store clerk. Further, in this way, when an error occurs in the payment device 20, it is possible to avoid the inconvenience of unnecessarily rushing the customer using the apparatus, it is possible to provide useful information to guide what to do to the customer. Further, in this case, the store clerk who has been called and rushed by the customer, by viewing the screen displayed on the display unit 29, it is possible to easily confirm the contents of the error that has occurred in the payment device 20.

Hereinafter, an operation example of the payment device 20 will be described. Note that the various processes described below are examples, and the order of some processes can be changed, some processes can be omitted, or other processes can be added as appropriate. For example, in the following description, descriptions of some processes are omitted in order to explain characteristic operations of the present embodiment in an easy-to-understand manner. For example, in a case where some kind of error occurs, processing for coping with the error may be performed, and description of such processing is omitted.

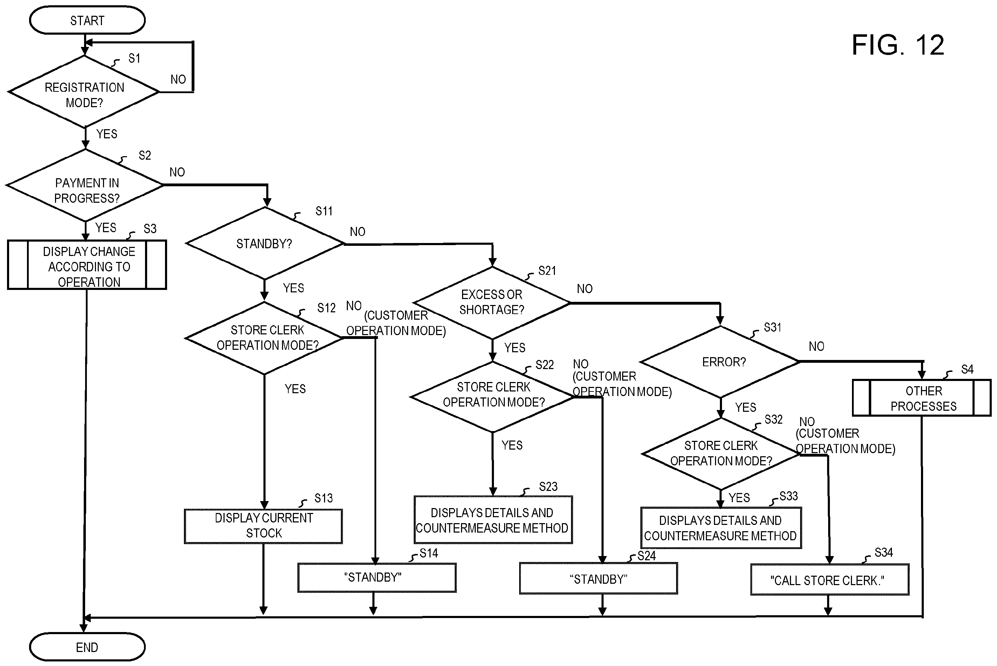

FIG. 12 is a flowchart illustrating a process performed by the payment device 20. It is assumed that the payment device 20 is operating in the normal operation (i.e., the store clerk operation mode or the customer operation mode).

First, the controller 40 of the payment device 20 determines whether the operation mode by the key operation unit 30 is the registration mode (step S1). When the operation mode is other than the registration mode (No in step S1), the controller 40 does not perform the process after step S2. When the operation mode is the registration mode (Yes in step S1), the controller 40 determines whether the payment device 20 is in the middle of the payment process (step S2). When payment is in progress (Yes in step S2), the controller 40 changes information displayed by the display unit 29 according to the operation status of the payment device 20 (step S3).

If the payment device 20 is not in the payment process in step S2 (No in step S2), the controller 40, the payment device 20 determines whether to be in the standby state, i.e., determines whether any instructions have been received from the sales data processing device 10 (step S11). If on standby (Yes in step S11), the controller 40 determines whether the payment device 20 is in the store clerk operation mode (step S12).

When the payment device 20 is in the store clerk operation mode (Yes in step S12), the controller 40 causes the display unit 29 to display a chart indicating the current stock for each denomination (step S13).

When the payment device 20 is not in the store clerk operation mode (that is, in the customer operation mode) (No of step S12), the controller 40 causes the display unit 29 to display the message "Standby" or the like (step S14).

If the payment device 20 is not in the standby state in the step S 11 (No in step S11), the controller 40 determines whether there is an excess or deficiency in the current stock of the respective denominations (step S21). When there is excess or deficiency (Yes in step S21), the controller 40 determines whether the payment device 20 is in the store clerk operation mode (step S22).

When the payment device 20 is in the store clerk operation mode (Yes of step S22), the controller 40 causes the display unit 29 to display information indicating the excess and deficiency and the countermeasures against the excess and deficiency (step S23).

When the payment device 20 is not in the store clerk operation mode (that is, in the customer operation mode) (No of step S22), the controller 40 causes the display unit 29 to display the message "Standby" or the like (step S24).

When there is no excess or deficiency in the current stock of each denomination in the step S21 (No in step S21), the controller 40 determines whether an error has occurred in the payment device 20 (step S31). If an error has occurred (Yes in step S31), the controller 40 determines whether the payment device 20 is in the store clerk operation mode (step S32).

When the payment device 20 is in the store clerk operation mode (Yes in step S32), the controller 40 causes the display unit 29 to display information indicating the error and the response to the error (step S33).

When the payment device 20 is not in the store clerk operation mode (that is, in the customer operation mode) (No of step S32), the controller 40 causes the display unit 29 to display a message such as "Call store clerk" (step S34).

In step S31, if there is no error in the payment device 20 (No in step S31), the controller 40 proceeds to another process (step S4).

As described above, it is possible to switch the information to be displayed on the display unit 29 according to the usage environment. That is, for example, while performing the display for the store clerk in the mode operated by the store clerk, avoiding the display of information that cannot be understood by the customer in the mode operated by the customer, if necessary, the customer can deal with, for example, it is possible to give an instruction to call the store clerk.

Further, the information indicating the state of the payment device 20 is displayed as the information indicating the state of the device 20 directed to the store clerk, and the instruction to the customer is displayed as the information directed to the customer. Thus, the display unit 29 for displaying information can be effectively utilized in each mode, and useful information can be provided to the operator.

It should be noted that the above-described embodiments can be modified and implemented as appropriate by changing a part of the configuration or function of each of the above-described apparatuses.

The programs executed by the apparatuses according to the above-described embodiments are provided in advance in the ROM 42, the storage device 44, or the like. The programs executed according to the above-described embodiments may be recorded in a computer-readable recording medium such as a CD-ROM, a flexible disk

(FD), or a CD-R, a DVD (digital versatile disk) in an installable format or an executable format.

Further, the programs executed according to the above-described embodiments may be stored in a computer connected to a network such as the Internet, and may be downloaded via a network. Further, such programs may be provided or distributed via a network such as the Internet.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure as provided by the appended claims. The accompanying claims and their equivalents are intended to cover such forms or modifications as would fall within the scope of the disclosure.

## Claims

1. A payment device connectable to a point-of-sale (POS) terminal installed in a store, comprising:
a slot through which bills or coins can be inserted;
a plurality of storage units in which the bills or coins can be stored for each denomination;
a display device;
an input device;
a controller configured to, in response to a command received from the POS terminal, perform a payment process to receive and dispense bills and coins, wherein
the controller is further configured to:
switch a display mode of the display device to one of a plurality of modes, including first and second modes, in accordance with an input made through the input device, and
in a time period between performing of payment processes, control the display device to display:
in the first mode, first information for a store clerk of the store, the first information indicating a detail of a status of the payment device, and
in the second mode, second information for a customer of the store without the detail of the status of the payment device.

2. The payment device according to claim 1, wherein
the first information indicates a total number of each of the bills or the coins stored in the storage units, and
the second information indicates that the payment device is in a standby state.

3. The payment device according to claim 2, wherein the total number of each of the bills or the coins is displayed by a chart.

4. The payment device according to any of claims 1 to 3, wherein the controller is configured to:
determine a total number of each of the bills or the coins stored in the storage units,
determine whether each of the bills or the coins is to be replenished or collected, and
upon determining that one of the bills or the coins is to be replenished or collected, control the display device to display:
in the first mode, a message indicating that said one of the bills or the coins is to be replenished or collected, and
in the second mode, a message indicating that the payment device is in a standby state.

5. The payment device according to claim 4, wherein the controller determines that one of the bills or the coins is to be replenished when the total number thereof is less than a first threshold value.

6. The payment device according to claim 4 or 5, wherein the controller determines that one of the bills or the coins is to be collected when the total number thereof is greater than a second threshold value that is greater than the first threshold value.

7. The payment device according to any of claims 4 to 6, wherein in the first mode the message further indicates a number of said one of the bills or the coins to be replenished or collected.

8. The payment device according to any of claims 1 to 7, wherein
the first information indicates a type of an error occurring in the payment device, and
the second information includes a message to call a store clerk.

9. The payment device according to any of claims 1 to 8, wherein the input device is locked and needs to be unlocked for the input to be made.

10. The payment device according to any of claims 1 to 9, wherein the input device includes a keyhole and is unlocked by inserting a matching key into the keyhole and rotating the key.

11. A method performed by a payment device connectable to a point-of-sale (POS) terminal installed in a store, the payment device including:
a slot through which bills or coins can be inserted,
a plurality of storage units in which the bills or coins can be stored for each denomination,
a display device, and
an input device, the method comprising:
receiving a command from the POS terminal, and performing a payment process to receive and dispense bills and coins;
switching a display mode of the display device to one of a plurality of modes, including first and second modes, in accordance with an input made through the input device; and
in a time period between performing of payment processes, displaying:
in the first mode, first information for a store clerk of the store, the first information indicating a detail of a status of the payment device, and
in the second mode, second information for a customer of the store without the detail of the status of the payment device.

12. The method according to claim 11, wherein
the first information indicates a total number of each of the bills or the coins stored in the storage units, and
the second information indicates that the payment device is in a standby state.

13. The method according to claim 12, wherein the total number of each of the bills or the coins is displayed by a chart.

14. The method according to any of claims 11 to 13, further comprising:
determining a total number of each of the bills or the coins stored in the storage units;
determining whether each of the bills or the coins is to be replenished or collected; and
upon determining that one of the bills or the coins is to be replenished or collected, displaying:
in the first mode, a message indicating that said one of the bills or the coins is to be replenished or collected, and
in the second mode, a message indicating that the payment device is in a standby state.

15. A non-transitory computer readable storage medium that stores a program causing a computer with a bill or coin slot, a plurality of bill or coin storage units, a display device, and an input device, to perform a method comprising:
receiving a command from a POS terminal installed in a store and connected to the computer, and performing a payment process to receive and dispense bills and coins;
switching a display mode of the display device to one of a plurality of modes, including first and second modes, in accordance with an input made through the input device; and
in a time period between performing of payment processes, displaying:
in the first mode, first information for a store clerk of the store, the first information indicating a detail of a status of the computer, and
in the second mode, second information for a customer of the store without the detail of the status of the computer.
